# DEMANDE DE BREVET EUROPEEN

(11) **EP 1 336 890 A1**
(43) Date de publication de la demande: **20.08.2003**
(21) Numéro de dépôt: 03290232.2
(22) Date de dépôt: 29.01.2003
(51) Int. Cl.: G02C 1/02, G02C 1/04

(54) **Procédé et dispositif de montage de verres de lunettes**

(30) Priorité: 13.02.2002 FR 0201807
(71) Demandeur: Lavie, Philippe, 78370 Plaisir (FR)
(72) Inventeur: Lavie, Philippe, 78370 Plaisir (FR)
(74) Mandataire: Cabinet Martinet & Lapoux

(57) **Abrégé**

Procédé et dispositif de montage de verres de lunettes, dans lesquels des branches (22) et un pont (18) sont reliés par des fils de matière plastique engagés dans des gorges périphériques des verres (10) et comprennent à leurs extrémités des pattes s'étendant sur les verres et comportant des trous ou des oeillets (36, 40) de passage de moyens de fixation tels que des vis, des rivets ou analogues.

## Description

La présente invention concerne un procédé et un dispositif de montage de verres de lunettes.

Dans un procédé connu de montage de verres, un fil de matière plastique (de « nylon » ou analogue), est engagé dans une gorge périphérique d'un verre et est accroché à ses extrémités sur une monture qui s'étend sur une certaine longueur du bord du verre, en général au moins le long du bord supérieur du verre, et qui comporte des branches articulées à ses extrémités et une partie centrale formant un pont entre les verres.

Ce montage a l'avantage d'être léger, esthétique, fiable dans le temps et facile à réaliser par un opticien. Toutefois, la monture qui s'étend le long du bord supérieur des verres forme une barre dans le champ de vision du porteur de lunettes et donne une sensation de limitation de ce champ.

On a proposé, pour remédier à cet inconvénient, des lunettes « sans monture » dans lesquelles des branches articulées et un pont sont fixés directement sur les verres au moyen de vis, rivets ou analogues montés dans des trous percés dans les verres au voisinage de leur périphérie. Ces lunettes sans monture donnent au porteur une sensation d'élargissement de la vision, mais le montage des branches et du pont sur les verres est relativement délicat à réaliser. En effet, en raison de la grande diversité de formes et de dimensions des verres, des branches et des ponts, le monteur ne dispose pas de gabarit permettant de repérer avec précision les positions des points de perçage des verres. Le montage est donc long, et coûteux en raison du nombre relativement élevé de verres qui peuvent être cassés au montage ou qui sont rendus impropres au montage par suite d'un positionnement incorrect des trous les uns par rapport aux autres et par rapport aux verres. En outre, le montage manque de rigidité et de stabilité lorsque les trous ou les encoches formés dans les verres sont un peu surdimensionnés.

On connaît notamment un dispositif dans lequel chaque branche articulée comprend une petite patte qui s'étend sur le verre de façon sensiblement radiale sur quelques millimètres de longueur et qui se termine par un oeillet ou analogue, pour le passage d'une vis ou d'un rivet. De même, chaque extrémité du pont est prolongée par une patte semblable se terminant par un oeillet pour le passage d'une vis de fixation ou d'un rivet. Pour que le montage ait une stabilité, chaque extrémité d'une branche articulée ou du pont comporte une autre patte sensiblement perpendiculaire à la première, de quelques millimètres de long, qui s'applique sur la périphérie du verre.

Pour le montage de ce dispositif, on met en place une branche articulée et une extrémité du pont sur un verre, on repère avec un crayon ou analogue la position des oeillets sur le verre, et on perce le verre aux endroits repérés. Il faut repérer les positions des oeillets avec une grande précision et percer le verre au diamètre exact des vis de fixation utilisées. Sinon, le montage a du jeu et les branches et le pont peuvent tourner par rapport aux verres, ce qui rend la paire de lunettes difficile à porter et amène souvent l'opticien à recommencer le montage avec de nouveaux verres.

La présente invention a notamment pour but de pallier ces inconvénients grâce à un procédé et un dispositif permettant un montage de verres qui est simple, précis, facile à réaliser, peu coûteux, fiable dans le temps, léger et esthétique.

Elle propose à cet effet un procédé de montage de verres de lunettes sur une monture comprenant au moins deux branches articulées et un pont, comportant à leurs extrémités des moyens de fixation sur les verres et une petite patte destinée à s'étendre le long de la périphérie du verre, caractérisé en ce qu'il consiste, sur chaque verre, à relier ladite patte d'une extrémité du pont à ladite patte d'une branche articulée par un fil de matière plastique engagé dans une gorge périphérique du verre, puis à fixer la branche articulée et le pont sur le verre par perçage du verre et mise en place des moyens de fixation.

Le procédé selon l'invention combine les avantages du montage connu à fil de matière plastique et des lunettes sans monture tout en évitant leurs inconvénients. En particulier, les positions des trous à percer dans les verres sont repérées automatiquement quand les branches et le pont sont mis en place sur les verres et maintenus au moyen du fil plastique engagé dans la gorge périphérique des verres. Après perçage des trous dans les verres, le montage s'effectue simplement en quelques instants par engagement des éléments de fixation dans les oeillets des branches et du pont et dans les trous des verres.

L'invention propose également un dispositif de montage de verres de lunettes comprenant deux branches articulées et un pont dont les extrémités comprennent de petites pattes destinées à s'étendre le long de la périphérie de chaque verre et des moyens de fixation sur les verres, caractérisé en ce que, sur chaque verre, les pattes des extrémités d'une branche articulée et du pont sont reliées par un fil de matière plastique engagé dans une gorge périphérique du verre.

Ce dispositif a l'avantage d'être simple, léger, esthétique, peu coûteux et utilisable avec toutes les formes de verres sans adaptation particulière.

Dans un mode de réalisation de l'invention, chaque branche comprend ladite patte destinée à s'étendre le long de la périphérie d'un verre pour le guidage ou l'accrochage du fil de matière plastique et une autre patte s'étendant sur une face du verre et comportant un oeillet destiné à recevoir un moyen de fixation sur le verre.

De même, le pont comprend à chacune de ses extrémités ladite patte destinée à s'étendre le long de la périphérie d'un verre pour le guidage ou l'accrochage du fil de matière plastique, et une autre patte s'étendant sur une face du verre et comportant un oeillet destiné à recevoir un moyen de fixation sur le verre.

Les oeillets sont de préférence circulaires ou sensiblement circulaires.

De façon simple, ces oeillets sont des trous formés dans lesdites autres pattes des branches et du pont.

Les éléments de fixation comprennent des vis, des rivets ou analogues ou encore des éléments à encliquetage élastique.

L'invention sera mieux comprise et d'autres caractéristiques, détails et avantages de la celle-ci apparaîtront plus clairement à la lecture de la description qui suit, faite à titre d'exemple en référence aux dessins annexés dans lesquels :
- les figures 1 et 2 sont des vues schématiques de face et de dessus respectivement du dispositif selon l'invention ;
- les figures 3 et 4 sont des vues schématiques partielles de face, à plus grande échelle, des composants essentiels de ce dispositif ;
- les figures 5 et 6 sont des vues schématiques partielles en perspective d'une variante de réalisation de ces composants.

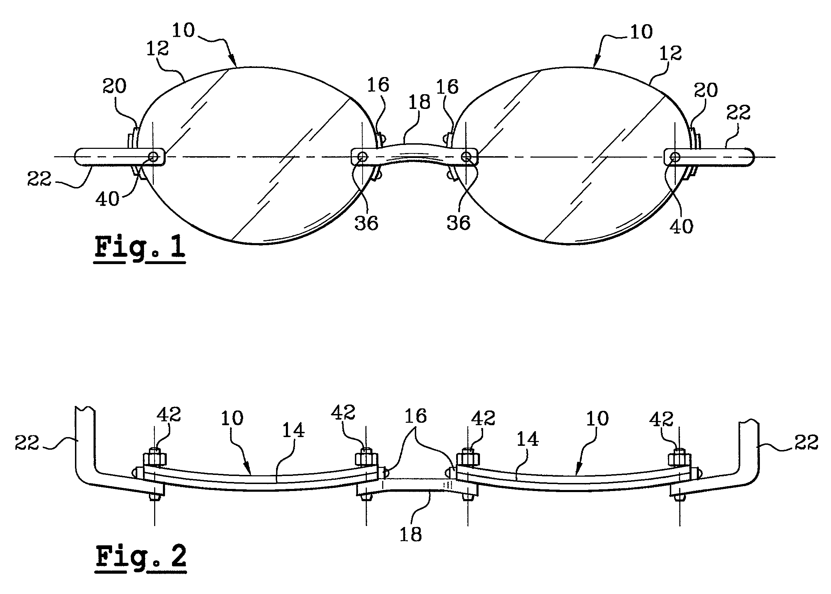

Dans l'exemple représenté aux figures 1 et 2, les références 10 désignent des verres de lunettes dont la périphérie 12 est formée avec une gorge annulaire continue de réception d'un fil 14 de matière plastique du type « nylon » ou analogue, très fin, ayant par exemple un diamètre de 0,5 mm et très peu visible. La formation d'une gorge annulaire dans le bord périphérique d'un verre est une opération classique, peu coûteuse et réalisable aisément et automatiquement au moyen de machines appropriées dont les opticiens sont en général équipés. Selon l'invention, le fil 14 relie sur chaque verre une patte d'extrémité 16 d'un pont 18 à une patte d'extrémité 20 d'une branche de lunettes 22, cette branche étant du type repliable ou articulé.

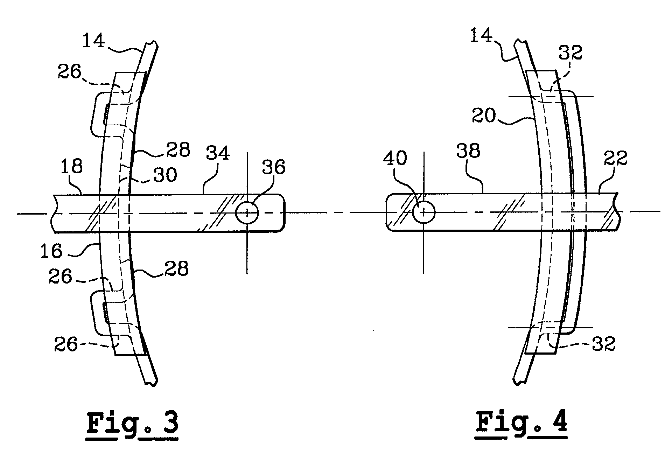

Comme on le voit mieux aux figures 3 à 6, les pattes d'extrémité 16 du pont 18 sont sensiblement perpendiculaires à ce pont et sont légèrement incurvées pour suivre la périphérie incurvée convexe des verres 10. Les extrémités des fils 14 sont fixées sur ces pattes d'extrémité 16 de façon classique. Par exemple, chaque patte 16 comprend à chacune de ses extrémités deux trous parallèles 26 dans lesquels le fil 14 est engagée, et une gorge 30 sur sa face en contact avec la périphérie du verre pour recevoir les extrémités 28 du fil 14 et les masquer.

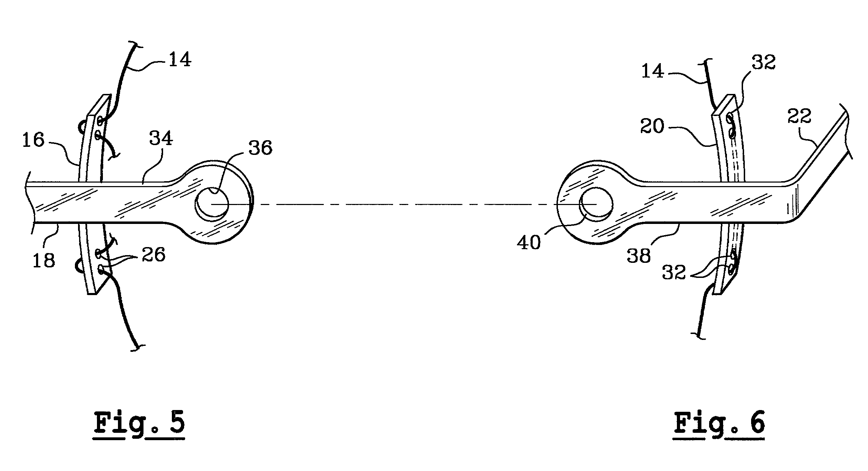

De même, la patte 20 de chaque branche 22 s'étend perpendiculairement à cette branche et est incurvée pour suivre la périphérie d'un verre 10 et elle comprend à chacune de ses extrémités au moins un trou 32 de passage du fil 14 qui peut s'étendre selon les réalisations, soit à l'intérieur (figure 6), soit à l'extérieur de la patte 20 comme représenté en figure 4, par rapport aux verres 10.

Les pattes 16 du pont 18 et 20 des branches articulées 22 ont typiquement une longueur de quelques millimètres.

Le pont 18 est prolongé à chaque extrémité par une patte 34 qui s'étend radialement sur une faible distance par exemple (moins de 10 mm) sur une face du verre 10 correspondant, de préférence sur la face extérieure de ce verre. La patte 34 comporte un trou 36 de passage d'un élément de fixation sur le verre 10, cet élément étant par exemple une vis, un rivet ou analogue ou encore une patte d'encliquetage élastique, comme cela sera décrit plus en détail ci-dessous.

Chaque branche de lunettes 22 comprend également une patte 38 qui s'étend radialement sur une face du verre 10 correspondant, de préférence sur la face extérieure de ce verre, et qui a une faible longueur, typiquement inférieure à 10 mm comme la patte 34 du pont 18. La patte 38 de la branche 22 comporte un trou 40 de passage d'un élément de fixation du type précité.

Dans l'exemple représenté, les pattes 34 du pont 18 et 38 des branches 22 sont sensiblement alignées entre elles. Bien entendu, elles pourraient être orientées de façon différente tout en s'étendant plus ou moins radialement par rapport aux verres depuis leur périphérie.

Le montage s'effectue de la façon suivante :

Les branches 22 et le pont 18 sont montés sur les verres 10 au moyen des fils 14 de façon classique, chaque fil 14 étant par exemple accroché à une extrémité d'une branche 16 du pont 18, passé par les trous 32 de la patte 20 de la branche articulée 22, puis mis en place dans la gorge périphérique du verre 10 correspondant, amené au voisinage de l'autre extrémité de la patte 16 du pont 18, coupé à longueur et accroché à son extrémité libre sur la patte 16. Pour cela, d'une façon bien connue dans la technique, on peut chauffer l'extrémité du fil pour le faire fondre et pour former une boule de matière plastique qui a une dimension supérieure au diamètre du trou 26 de la patte 16 dans lequel passe le fil 14. La fixation de l'extrémité libre du trou 14 sur la patte 16 s'effectue bien entendu quand le fil 14 est dégagé de la gorge périphérique du verre 10. Ensuite, on remonte l'ensemble formé par le pont 18, la branche 22 et le fil 14 sur le verre 10 en mettant à profit l'élasticité du fil 14. D'une autre façon, le passage du fil 14 dans deux trous voisins 26, 32 d'une patte 16 ou 20 est en général suffisant pour bien accrocher le fil 14 sur les pattes, notamment quand celles-ci sont en métal.

Lorsque les branches 22 et le pont 18 sont placés dans les positions souhaitées sur les verres 10, on repère les positions des trous 36 et 40 sur les verres et on perce les verres aux emplacements repérés. Avantageusement, on peut percer les verres en utilisant les trous 36, 38 comme guides de perçage.

Dans l'exemple représenté en figure 2, les éléments de fixation 42 des branches 22 et du pont 18 sur les verres 10 sont du type vis-écrou. On peut également utiliser comme éléments de fixation des rivets ou des éléments à encliquetage élastique, formés par exemple par des épingles coudées, en fil à ressort ou analogue. Eventuellement, la fixation au moyen d'éléments à encliquetage élastique peut être consolidée par un point de colle déposé dans chaque trou formé dans le verre.

Comme représenté en figure 1, les positions des branches 22 et des extrémités du pont 18 sur les verres 10 peuvent être approximativement diamétralement opposées. Il est également possible, en fonction de la forme des verres, de rapprocher les branches 22 et le pont 18 de la partie supérieure des verres.

Un avantage important du dispositif selon l'invention est que les positions des branches et du pont sur les verres sont définies de façon positive par le fil plastique 14 qui est monté tendu dans la gorge périphérique de chaque verre. Cette tension du fil 14 permet de ne pas avoir de jeu dans le montage, même dans le cas où les vis de fixation des branches et du pont sur les verres seraient légèrement desserrées, et les pattes 16, 20 empêchent toute rotation du pont et des branches sur les verres.

De plus, le dispositif selon l'invention présente tous les avantages de légèreté et d'esthétique des lunettes « sans monture » de la technique antérieure, tout en bénéficiant d'une solidité et d'une stabilité nettement supérieures.

## Revendications

1. Procédé de montage de verres de lunettes sur une monture comprenant deux branches articulées (22) et un pont (18), comportant à leurs extrémités des moyens de fixation sur les verres et une petite patte (16, 20) destinée à s'étendre le long de la périphérie du verre, **caractérisé en ce qu'**il consiste, sur chaque verre (10), à relier ladite patte (16) d'une extrémité du pont à ladite patte (20) d'une branche articulée par un fil (14) de matière plastique engagé dans une gorge périphérique du verre, puis à fixer la branche articulée (22) et le pont (18) sur le verre par perçage du verre et mise en place des moyens de fixation.

2. Procédé selon la revendication 1, **caractérisé en ce que** le fil (14) s'étend sur sensiblement toute la périphérie du verre (10) et est tendu.

3. Procédé selon la revendication 1 ou 2, **caractérisé en ce qu'**il consiste à accrocher le fil (14) à ses extrémités sur une patte (16, 20) du pont ou d'une branche articulée.

4. Procédé selon une des revendications 1 à 3, **caractérisé en ce que** la branche articulée (22) et chaque extrémité du pont (18) comporte un oeillet ou analogue (36, 40) destiné à être appliqué sur le verre (10) et **en ce que** le procédé consiste à utiliser ces oeillets comme guides de perçage du verre.

5. Procédé selon l'une quelconque des revendications précédentes, **caractérisé en ce que** les branches et le pont sont fixés sur les verres au moyen de vis, rivets ou analogues ou d'éléments à encliquetage élastique.

6. Dispositif de montage de verres de lunettes, comprenant deux branches articulées (22) et un pont (18) dont les extrémités comprennent de petites pattes (16, 20) destinées à s'étendre le long de la périphérie de chaque verre (10) et des moyens de fixation sur les verres, **caractérisé en ce que**, sur chaque verre (10), les pattes des extrémités d'une branche articulée (22) et du pont (18) sont reliées par un fil (14) de matière plastique engagé dans une gorge périphérique du verre.

7. Dispositif selon la revendication 6, **caractérisé en ce que** le fil (14) est tendu et s'étend sur sensiblement toute la périphérie du verre.

8. Dispositif selon la revendication 6 ou 7, **caractérisé en ce que** le fil (14) est accroché à ses extrémités sur une petite patte (16, 20) du pont ou d'une branche articulée.

9. Dispositif selon l'une quelconque des revendications 6 à 8, **caractérisé en ce que** chaque petite patte (16, 20) comprend à ses extrémités au moins un trou (26, 32) de passage du fil (14).

10. Dispositif selon la revendication 9, **caractérisé en ce qu'**au moins une petite patte (16, 20) comprend à ses extrémités deux trous (26, 32) voisins pour l'accrochage du fil (14).

11. Dispositif selon l'une des revendications 6 à 10, **caractérisé en ce que** les branches articulées et le pont sont fixés sur les verres (10) par des vis, des rivets, des moyens d'encliquetage élastique ou analogues.
